# EUROPEAN PATENT SPECIFICATION

(11) **EP 3 288 760 B1**
(45) Date of publication and mention of the grant of the patent: **31.03.2021**
(21) Application number: 16725267.5
(22) Date of filing: 29.04.2016
(51) Int. Cl.: B32B 15/082, E04B 1/84, B32B 7/00, B32B 3/00, C09J 9/02, B32B 15/20, B32B 15/06, B32B 7/12, B32B 27/30, B32B 15/098, B32B 15/09, B23K 101/18, B32B 15/08, B23K 35/02, B32B 15/04

(54) **WELDABLE LAMINATED STRUCTURE AND METHOD OF WELDING**
SCHWEISSBARE LAMINIERTE STRUKTUR UND VERFAHREN ZUM SCHWEISSEN
STRUCTURE STRATIFIÉE SOUDABLE ET PROCÉDÉ DE SOUDAGE

(30) Priority: 01.05.2015 WO PCT/US2015/028801
(43) Date of publication of application: 07.03.2018
(73) Proprietor: Material Sciences Corporation, Elk Grove Village, Illinois 60007 (US)
(72) Inventor: SCHOONOVER, Jason, Milan, Michigan 48160 (US); BORTELL, Peter, Tecumseh, Michigan 49286 (US); TULLIS, Bryan, South Lyon, Michigan 48178 (US); MURPHY, Matthew, Birmingham, Michigan 48009 (US)
(74) Representative: McDonough, Jonathan
(86) International application number: PCT/US2016/029974
(87) International publication number: WO 2016/178954

(56) References cited:
- KR-A- 20140 002 423
- US-A- 4 353 951
- US-A- 5 339 038
- US-A- 5 753 885
- US-A1- 2006 062 977
- US-A1- 2006 062 977
- US-A1- 2007 295 704
- US-A1- 2010 040 902
- US-B1- 6 592 968

## Description

### CROSS REFERENCES TO RELATED APPLICATIONS

This Application claims the benefit of International Patent Application PCT/US2015/028801, filed on May 1, 2015.

### TECHNICAL FIELD

The present disclosure relates to a laminate of metal sheets including a core layer disposed between and connected to the metal sheets, and specifically, to a laminate including metal sheets of an aluminum material.

### BACKGROUND

A laminate sheet made of metal sheets including a viscoelastic core disposed therebetween is less dense than a monolithic (solid) metal sheet of the same thickness. The monolithic metal sheet may be noisier, e.g., may exhibit less favorable noise-vibration-harshness (NVH) characteristics as compared with the laminate sheet, due to the modulus differences of the materials, where the monolithic metal sheet is more susceptible to vibration and resonance and more sensitive to frequency management than the laminate sheet. Further, structural components formed from sheet material can include complex shapes such as bends, ribs, beads, offsets, depressions, channels, contours and the like, which can be added to improve stiffness and/or bending strength to the structural component. Such complex features can protrude from the sheet, increasing the packaging space required by the structural component and increasing radiated noise through the monolithic component. As such, structural components formed from monolithic metal sheet often require modification by adding damping coatings and/or damping componentry such as damping patches to provide acceptable NVH behavior. Such added treatments, coatings and/or damping componentry add cost and weight to the monolithic component. Accordingly, the total weight of a structural component made of a laminate structure is substantially less than the total weight of a structural component made of a monolithic sheet and subsequently treated with added damping coatings or damping componentry.

Monolithic metal sheet and monolithic structural components formed from monolithic sheet can be joined by welding to other metal components. Welding of laminate sheet and welding of laminate components formed from laminate sheet differs from welding of monolithic sheet, due to the insulating (non-conductive) characteristics of the viscoelastic layer of the laminate sheet which inhibits current flow through the weld zone during welding, and liquefying and/or vaporizing of the viscoelastic layer which can occur during the welding process, where the liquefied and/or vaporized viscoelastic material can contaminate the weld being formed and/or contribute to the formation of porosity in the weld. Porosity and/or contamination in the weld can decrease the durability, fatigue strength and overall integrity of the weld.

US 4,353,951 (Yukitoshi, Teruo et al) discloses a spot-weldable bonded clad metal plate wherein the metal sheets are 0.05-1.0 mm thick and at least 0.4 mm thick. The adhesive layer has a thickness of 15-60 microns and the adhesive layer contains 10-100 g/m² of metallic powder having a particle diameter corresponding to 0.5-1.5 times the thickness of the adhesive layer.

US 2007/295704A1 (Sigler, David R. et al) discloses additives for improved weldable composites. There is disclosed a metal composite structure featuring two metal members having a viscoelastic layer sandwiched therebetween. The viscoelastic layer contains carbide-forming, carbon trapping particles configured and sized to provide an effective inhibitor to carbon migration from the viscoelastic layer during welding.

US 2006/062977 (Sigler, David R. et al) discloses laminated composites such as noise dampening sheet metal sandwiches with viscoelastic adhesive cores which are strengthened against delamination during forming and made more conductive for welding. Electrically conductive, metal-element containing particles, wires, wire meshes, or the like conductive bonding elements are included in the core material and fused to facing surfaces of the metal sheets to provide many mechanical bonding connections and electrical connections over the bonded area of the composites.

US 5,753,885 (Iwasa, Takashi et al) discloses a powder material for use in resistance welding articles of aluminum. The powder material comprises a mixture of 10-50% by weight of a liquid resin and the remaining proportion of a magnesium powder or a blend of magnesium and aluminum powders. There is also disclosed a method of resistance welding articles of aluminum comprising the steps of preparing a pasty mixture by mixing in a predetermined amount of a liquid resin having a predetermined initial viscosity, a predetermined amount of a metal powder or a blend of metal and metal oxide powders, and inserting the pasty mixture between the mating weld surfaces of the aluminum articles.

As such, it is desirable to provide a laminate sheet material which may be formed into a laminate structural component which, relative to a monolithic structural component formed from a monolithic metal sheet, exhibits relatively lower total weight and relatively better damping characteristics, and is attachable to other components by welding.

### SUMMARY

A weldable laminate structure and method of forming a welded joint is described. The laminate structure, which includes a viscoelastic adhesive layer between and bonding aluminum sheets, is advantaged by being formable into a structural component which provides desired levels of vibration damping, sound transmission loss, structural separation, etc. at a lower total weight relative to a structural component formed of a monolithic metal sheet, by eliminating the treatments, such as sound dampening coatings or patches, which must be added to the structural component made from monolithic aluminum to achieve the desired NVH performance. A structural component, as that term is used herein, refers to a component formed from sheet material which has a complex shape, e.g., a shape other than flat sheet, and is used in a structural application. The structural component can be formed from the laminate structure, by any forming process suitable for forming monolithic sheet material into a structural component, including, by way of non-limiting example, stamping, extrusion, blanking, bending, etc., such that the better damping performance and total system weight reduction can be achieved by forming the structural component from a laminate structure without requiring significant change to the forming process used to form the structural component formed from monolithic aluminum.

For example, the complex shape of a structural component can be defined by one or more features, such as one or more of a bend, rib, aperture, bead, offset, chamfer, depression, channel, curve, contour, extruded portion, or other feature formed into the laminate structure to define the structural component. As such, the laminate structure described herein can be formed into structural components where there is a particular need for noise dissipation, vibration and/or sound damping, structural separation, thermal insulation and/or acoustic absorption, for example, between spaces or areas separated by the structural component(s) formed of the laminate structure. The term "structural component" is non-limiting, such that a structural component may have nominal or minimal load bearing requirements. In a non-limiting example, the laminate structure described herein is formable into structural components for vehicle applications, such as close-out panels, also known as dash panels or floor pans, which provide structure to the vehicle by separating, respectively, the engine compartment or trunk compartment from the passenger compartment. Other non-limiting examples of vehicle structural components which may be formed from the laminate structure include wheel wells, transmission tunnel covers, cowl plenums, etc.

A laminate structure and method of forming is provided as defined in the appended claims. The laminate structure includes a first metal sheet having a first thickness, a second metal sheet having a second thickness, and an adhesive core having an adhesive thickness. The adhesive core is disposed between and bonded to the first and second metal sheets. The first and second metal sheets are made of an aluminum based material and the adhesive core is made of an adhesive material which may also be described herein as a viscoelastic adhesive material. The viscoelastic adhesive material, in a non-limiting example, can be made of one of a phenolic modified rubber material, an acrylic based material, and a polyester based material.

The laminate structure is a weldable laminate structure formed by including a plurality of electrically conductive filler particles dispersed in the adhesive material of the core layer. The filler particles are made of a first filler material and a second filler material which is a different material than the first filler material, where at least one the first and second filler materials has a filler electrical resistivity greater than the aluminum electrical resistivity. The plurality of electrically conductive filler particles are dispersed in the adhesive core to define a conduction path by which an electrical current applied to one of the first and second metal sheets is conducted through the adhesive core to the other of the first and second metal sheets to generate a resistive heat which is sufficient to at least partially melt the first and second metal sheets in a weld zone including the conduction path. The percentage weight of the filler particles is in a range of about 12% to 49% of the total weight of the adhesive core. The volume percent of the filler particles is less than about 15% of the total volume of the adhesive core. A method of welding the laminate structure formed with the electrically conductive filler particles is provided.

The above features and advantages, and other features and advantages, of the present teachings are readily apparent from the following detailed description of some of the best modes and other embodiments for carrying out the present teachings, as defined in the appended claims, when taken in connection with the accompanying drawings.

### BRIEF DESCRIPTION OF THE DRAWINGS

FIG. 1 is a schematic view of a cross-section of a first example laminate structure including a core layer disposed between aluminum sheets;
FIG. 2 is a schematic view of a cross-section of a second example laminate structure including a core layer disposed between aluminum sheets;
FIG. 3 is a schematic view of a cross-section of a third example laminate structure including a core layer disposed between aluminum sheets;
FIG. 4 is a schematic view of a cross-section of a fourth example laminate structure including a core layer disposed between aluminum sheets; and
FIG. 5 is a schematic cross-sectional view showing a weld zone during a welding operation to form a welded assembly including a laminate structure and a metal component.

### DETAILED DESCRIPTION

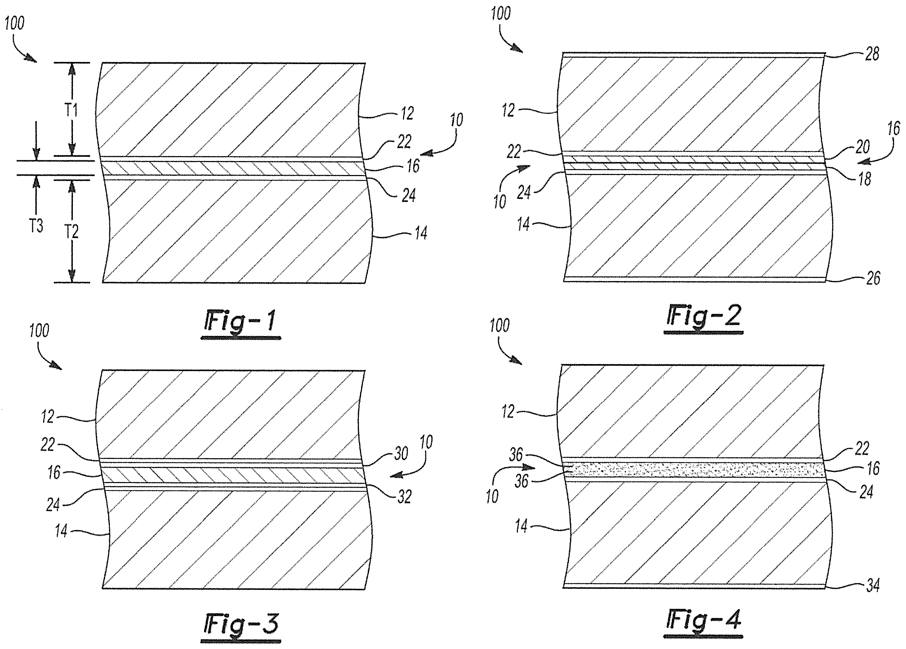

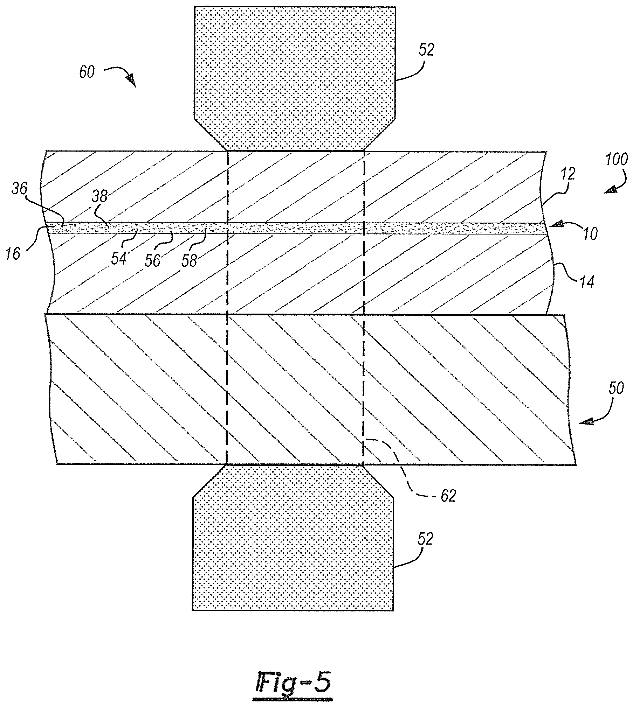

The elements shown in FIGS. 1-5 are not necessarily to scale or proportion, and the arrangement of elements shown in FIGS. 1-5 are not intended to be limiting. Accordingly, the particular dimensions and applications provided in the drawings presented herein are not to be considered limiting. Referring to the drawings wherein like reference numbers represent like components throughout the several figures, there is shown in FIGS. 1-5 a laminated material generally indicated at 100, also referred to herein as a laminate structure or as a laminate. The laminate 100 includes opposing metal sheets 12, 14 which are connected by a core layer 10 disposed therebetween. Each of the metal sheets 12, 14 is made of an aluminum based metal. The term "sheet" as used herein in the context of aluminum materials is understood as being a rolled aluminum alloy product with a uniform thickness of less than 6 mm. By way of non-limiting example, each of the metal sheets 12, 14 may be referred to herein as a skin, metal layer, aluminum sheet, substrate, and/or base substrate. The core layer 10 includes an adhesive core 16 which has NVH characteristics such that the core layer 10 in combination with the aluminum sheets 12, 14 provide a laminate structure 100 which is characterized as a vibration damping material. The adhesive core 16 may also be referred to herein as a viscoelastic core 16, and/or the adhesive core 16 may be characterized as being formed of a viscoelastic material 38 (see FIG. 5) and/or having viscoelastic properties at the target operating temperature range of the laminate, such that the viscoelastic core 16 substantially defines the damping properties of the laminate structure 100. The core layer 10 is disposed between the aluminum sheets 12, 14 such that the core layer 10 spans substantially the entirety of (i.e., is coextensive with) the metal layer 12 and the metal layer 14, adhering (i.e., rigidly attaching) the two aluminum sheets 12, 14 together such that the core layer 10 is constrained by the metal layers 12, 14. Notably, the laminate structure 100 may include additional layers such as additional substrate layers and coating layers, and the core layer 10 may include a plurality of layers including one or more adhesive layers, sound-damping viscoelastic layers, coating layers, electrically or thermally conductive layers, corrosion prevention layers, etc. such that it would be understood that the examples shown in FIGS. 1-5 are illustrative and are not intended to be limiting.

The laminate structure 100 described herein may be formed into structural components where there is a particular need for enhancing structural reinforcement, vibration and/or sound damping, thermal insulation and/or acoustic absorption, for example, between spaces or areas separated by the structural component(s) formed of the laminate structure 100. The laminate structure 100 described herein, including aluminum sheets 12, 14 and core layer 10, is advantaged by being formable into a structural component which provides desired levels of vibration damping, sound transmission loss, structural separation, etc. at a substantially lower weight relative to a structural component formed of a steel based material. The laminate structure 100 is advantaged by being formable into a structural component which provides significantly improved levels of vibration damping, sound transmission loss, etc. at an equal or lower weight relative to a structural component formed from a monolithic metal sheet, and without requiring added treatments, such as sound dampening coatings or patches, to achieve the desired NVH performance. A structural component, as that term is used herein, refers to a component formed from sheet material which has a complex shape, e.g., a shape other than flat sheet, and is used in a structural application. For example, the complex shape of a structural component can be defined by one or more features, such as one or more of a bend, rib, aperture, bead, offset, chamfer, depression, channel, curve, contour, extruded portion, or other feature formed into the laminate structure to define the structural component. The formed features defining a structural component formed from the laminate structure 100 create discontinuities in the laminate structure 100 which change the modal frequencies of the laminate structure 100. For example, discontinuities created by formed features in a component formed from the laminate structure 100 modify and/or change resonant frequencies of sound waves transmitted through the laminate structure 100, relative to the transmission of sound waves through a monolithic (solid) material. As such, the laminate structure 100 described herein can be formed into structural components where there is a particular need for noise dissipation, vibration and/or sound damping, thermal insulation and/or acoustic absorption, for example, between spaces or areas separated by the structural component(s) formed of the laminate structure 100. The term "structural component" is non-limiting, such that a structural component can include components having formed features which have nominal or minimal load bearing requirements, although it would be understood that formed features such as ribs, channels, beads, or other geometric formed features included in a component formed from the laminate structure 100 can increase the stiffness and/or rigidity of the component. In a non-limiting example, the laminate structure 100 described herein is formable into structural components for vehicle applications, such as close-out panels, also known as dash panels or floor pans, which provide structure to the vehicle by separating, respectively, the engine compartment or trunk compartment from the passenger compartment. Other non-limiting examples of vehicle structural components which may be formed from the laminate structure 100 include wheel wells, transmission tunnel covers, floor pans, cowl plenums, etc. In a non-limiting example, the core layer 10 may be electrically conductive and/or the aluminum sheet 12, 14 may be coated such that the laminate structure 100 can be joined by welding to another metallic component 50 (see FIG. 5).

In a preferred example the aluminum based material comprising aluminum sheets 12, 14 is one of a 5xxx and 6xxx series aluminum alloy having elongation greater than about 15%, preferably greater than about 20%, and more preferably having an elongation of at least about 25%, and having an n value of at least 0.1 and an r value of at least 0.8, where the n and r values characterize formability of the aluminum sheet 12, 14. The "n value" as used herein is understood as being the strain hardening exponent obtained by calculating the slope of the true stress and true strain curve of the material, where it is understood that increasing the n value increases the formability of the material. The "r value" as used herein is understood as being the Lankford value, also referred to as the Lankford coefficient, plastic strain ratio, and/or plastic anisotropy factor, and is a measure of the ratio of the true width (or lateral) strain to the true thickness strain in a tensile test of the aluminum sheet 12, 14. The r value indicates the capacity of an aluminum sheet to resist thinning, where it is understood that the higher the r value, the greater the resistance to thinning during deep drawing. By way of example, a 5xxx or 6xxx series aluminum alloy can be used for aluminum sheets 12, 14 to provide high elongation and a heat stable structure such that the base substrates, e.g., the aluminum sheets 12, 14, provide strength and stiffness while being formable, for example, by stamping, extrusion, deep drawing, etc. The aluminum material forming the aluminum sheets 12, 14 may be 1/4 hard or lower, such that the aluminum sheets 12, 14 are readily formable. For example, the aluminum sheets 12, 14 may be provided in an annealed temper condition also known as an "OT" temper, or in a strain hardened tempered 1/4 hard condition also known as an "H2" temper. In one example, a laminate structure 100 usable for forming automotive components such as dash panels is formed of aluminum sheets 12, 14 of a 6xxx series aluminum alloy provided with an OT temper, such that the laminate structure 100 is readily formable by pressing and/or stamping into complex shapes such as dash panels, and is heat treatable, for example, during paint baking of the dash panels and/or vehicle including the dash panels formed from the laminate structure 100. The example of a 5xxx or 6xxx series aluminum alloy material used for forming aluminum sheets 12, 14 is non-limiting, and it would be understood that other aluminum alloys may be used to form aluminum sheets 12, 14.

By way of non-limiting example and referring to FIG. 1, the thickness T1, T2 of each aluminum sheet 12, 14 is in the range of about 0.4 mm to 2.0 mm. In a preferred example, the thickness T1, T2 of each aluminum sheet 12, 14 is in the range of about 0.5 to 1.0 mm. In a more preferred example, the thickness T1, T2 of each aluminum sheet 12, 14 is within the range of about 0.5 mm to 0.8 mm. The thickness T1, T2 of the aluminum sheets 12, 14 may be, but is not required to be, the same thickness. For example, the thickness T1 of aluminum sheet 12 may differ from the thickness T2 of aluminum sheet14 as required by a particular use of the laminate structure 100, and/or as required to form a particular component from the laminate structure 100 and/or to provide functional characteristics such as strength, stiffness, etc. required by the particular component formed from the laminate structure 100. The combined (total) thickness of the aluminum sheets 12, 14 and the adhesive core 16 is controlled such that the laminate structure 100 is characterized by an n value of at least 0.1, an r value of at least 0.8, an adhesive strength as measured by T-peel of at least 10 pounds-force/inch and a lap shear strength of at least 2 mega-Pascal such that the laminate structure 100 is formable into structure components by stamping, bending, extrusion and the like without separation of the adhesive core 16 from the aluminum sheets 12, 14 or fracturing of the aluminum sheets 12, 14. The examples are illustrative and non-limiting, and it would be understood that one of the aluminum sheets 12 could be a different aluminum material, temper, and/or thickness than the other aluminum sheet 14.

The core layer 10 is disposed between the aluminum sheets 12, 14 such that the core layer 10 spans substantially the entirety of (i.e., is coextensive with) the metal layer 12 and the metal layer 14. The laminate structure 100 is formed by laminating the metal sheets 12, 14 with the core layer 10 disposed therebetween such that the core layer 10 adheres (i.e., rigidly attaches) the two aluminum sheets 12, 14 together. The core layer 10 includes an adhesive core 16, which substantially defines and/or provides the NVH (noise, vibration, harshness) and damping performance characteristics of the laminate structure 100. The core layer 10 and/or the adhesive core 16 has sufficient adhesive properties to attach the two aluminum sheets 12, 14 to each other, and has viscoelastic properties such that it dissipates vibrational energy by converting the vibrational energy into thermal energy through internal shearing of the adhesive material 38.

Referring again to FIG. 1, in a non-limiting example the adhesive core 16, which provides the NVH performance, e.g., acts as the damping layer and attaches the aluminum sheets 12, 14 to each other to form the laminate structure 100. The adhesive core 16 acts as the damping layer by converting sound energy into heat via shear action of the adhesive material 38 forming the adhesive core 16, and also acts to hold the aluminum sheets 12, 14 together during and after forming of a component from the laminate structure 100. The adhesive core 16 may be formed of a combination of one or more of adhesive materials 38 including one or more of an acrylic, polyester, polyacrylate, phenolic, rubber and/or urethane based material. In a preferred example, the adhesive core 16is formed of an adhesive material 38 which is a viscoelastic material such as a phenolic modified rubber adhesive, a rubber phenolic blend, or a rubber-based viscoelastic material. In other examples the adhesive core 16 is formed of one of an acrylic material, an acrylic rubber hybrid material, a polyester material including a cross-linking agent, a rubber phenolic material, a polyester rubber phenolic material, a polyacrylate material, a polyester-based acrylic material, and a rubber phenolic blend. The adhesive core 16 may be applied to the aluminum sheets 12, 14 to provide a dry film thickness (DFT), e.g., an adhesive thickness T3 shown in FIG. 1, of the adhesive core 16 within the range of about 0.0005 inches to 0.0030 inches (approximately 0.013 millimeters (mm) to 0.076mm), where the damping performance of the laminate structure 100 and the thickness T3 of the adhesive core are related and dependent upon the metal layer mass and effective shear achieved with the core. In a preferred example to achieve the desired damping performance of the laminate structure 100, the thickness T3 of the adhesive core 16 is within the range of about 0.001 inches to 0.0020 inches (0.025 mm to 0.0508 mm). In a more preferred example, the thickness T3 of the adhesive core 16 is within the range of about 0.0008 inches to 0.0013 inches (0.025 mm to 0.03 mm). In a most preferred example, the thickness T3 of the adhesive core 16 is less than 0.0010 inches (< 0.025 mm), and/or within the range of about 0.0008 inches to 0.0012 inches (0.020 mm to 0.030 mm).

The adhesive material 38 forming the adhesive core 16 may be applied to one of the aluminum sheets 12, 14 in a single layer prior to laminating the aluminum sheets 12, 14 together with the adhesive core 16 therebetween to form the laminate structure 100. In another example, the adhesive material 38 forming the adhesive core 16 may be applied in two adhesive layers 18, 20, as shown in FIG. 2, to form the adhesive core 16. For example, a first adhesive layer 18 may be applied to the aluminum sheet 14 and a second adhesive layer 20 may be applied to the aluminum sheet 12 prior to bringing the two aluminum sheets 12, 14 together during laminating. In this example, the bond strength and/or peel strength of the laminate structure 100 including the first and second adhesive layers 18, 20 bonded to each other is substantially higher relative to a laminate structure 100 having an adhesive core 16 formed from a single layer of adhesive material 38 applied to one of the aluminum sheets 12, 14 prior to laminating the lamination structure 100.

The thickness of each of the two adhesive layers 18, 20 is controlled to provide the desired total dry film thickness T3 of the adhesive core 16 in the finished laminate structure 100. By way of non-limiting example, the overall thickness of the laminate structure 100, exclusive of exterior layers 26, 28 and isolation layers 34, may be in the range of about 0.813 mm to 4.76 mm. For example, a laminate structure 100 may include aluminum sheets 12, 14 each having a thickness T1, T2 of 0.4 mm and an adhesive core having a thickness T3 of 0.013 mm for a total thickness (T1+T2+T3) of 0.813 mm and an aluminum to adhesive thickness ratio of 61.5, where the aluminum to adhesive thickness ratio is calculated as (T1+T2)/T3. In another example, a laminate structure 100 may include aluminum sheets 12, 14 each having a thickness T1, T2 of 2.0 mm and an adhesive core having a thickness T3 of 0.076 mm for a total thickness of 4.076 mm and an aluminum to adhesive thickness ratio of 52.6. In a preferred example, the overall thickness of the laminate structure 100 may be in the range of about 1.45 mm to 1.66 mm. For example, a laminate structure 100 in the preferred thickness range may include aluminum sheets 12, 14 each having a thickness T1, T2 of 0.6 mm and an adhesive core 16 having a thickness T3 of 0.025 mm for a total thickness of 0.1.45 mm. In another preferred example, a laminate structure 100 may include aluminum sheets 12, 14 each having a thickness T1, T2 of 0.8 mm and an adhesive core having a thickness T3 of 0.06 mm for a total thickness of 1.66 mm. In a preferred example, the ratio of the combined thickness (T1+T2) of the aluminum sheets 12, 14 to the thickness T3 of the adhesive core 16 is within the range of about 25 to 50, where it would be understood that the thickness T1, T2 of the aluminum sheets 12, 14 substantially contributes the tensile strength and rigidity to the laminate structure 100, and the thickness T3 of the adhesive core 16 substantially contributes to the damping characteristics of the laminate structure 100, and where the thickness ratio influences the CLF behavior of the laminate structure 100. The optimal thickness for efficient vibration dissipation can be calculated for every metal gage used. By way of example, the laminate structure 100 may be characterized by an adhesive thickness ratio in the range of about 8:1 to 50:1. The laminate structure 100 having an aluminum to adhesive thickness ratio ((T1+T2)/T3) of 8:1 or more is characterized by a density substantially similar to that of monolithic (solid) aluminum, which has a density of 2.7 gm/cc. In a preferred example, a laminate structure 100 having an aluminum to adhesive thickness ratio ((T1+T2)/T3) of 25: 1 has a density of at least 2.56 gm/cc, such that the density of the laminate structure 100 is at least about 95% that of monolithic aluminum, contributing to the tensile properties and rigidity of the laminate structure 100. In a preferred example, the laminate structure 100 has a density of at least 2.64 gm/cc.

The adhesive material 38 of the adhesive layers 18, 20 may be, in a non-limiting example, one of a polyester based material which may be a cross-linking polyester, an acrylic based material which may optionally include a cross-linking agent to provide relatively higher resistance to chemical attack, and a phenolic modified rubber. In one example, the adhesive core 16 formed from the phenolic modified rubber material may be characterized by a matrix structure including rubber dispersed in a phenolic matrix such that bond strength of the laminate structure 100 is substantially defined by, e.g., resultant from, the bonding of the phenolic to the aluminum sheets 12, 14 and the bonding of the phenolic to the dispersed rubber particles. The adhesive material 38 may be applied to the aluminum sheet 12, 14 by any suitable technique, including, for example, spraying, hot melt and/or rolling techniques by which the adhesive material 38 is applied to the aluminum sheet 12, 14, as a solvent based adhesive material, to provide full coverage of the aluminum sheet 12, 14 at the desired thickness prior to laminating the aluminum sheets 12, 14 together. In another example, the adhesive material 38 may be provided as a dry adhesive film and applied to one or both of the aluminum sheets 12, 14 prior to laminating. The dry adhesive film can be applied, for example, in a continuous process where the dry adhesive film is interleaved between the aluminum sheets 12, 14 prior to laminating. The adhesive material 38 is heated and/or cured during the laminating process forming the laminate structure 100 by a means suitable to the type of the adhesive material 38 being applied, which may include one or a combination of exposing the adhesive material 38 to elevated temperatures, for example, using flame bars, incinerator ovens, hot air ovens, etc., and/or hot melt, infrared, and ultraviolet systems as understood by those knowledgeable in the field of laminating. The examples are non-limiting, and it would be understood that other forms of adhesive materials 38 such as dry powder or web forms, application methods and curing processes may be used within the scope of forming the laminate structure 100 including the aluminum sheets 12, 14 and the core layer 10 described herein.

The adhesive material 38 forming the core layer 10 and/or the adhesive core 16 is characterized by an elongation which is substantially greater than the elongation of the aluminum material comprising the aluminum sheets 12, 14, such that during deformation of the laminate structure 100, for example, during stamping, extrusion, and/or bending of the laminate structure 100 to form a component therefrom, the core layer 10 remains in an elastic range and does not separate from the edges of and/or between the aluminum sheets 12, 14 of the laminate structure 100, where it would be understood that separation of the adhesive core 16 from the aluminum sheets 12, 14 would affect the damping characteristics of the laminate structure 100 in the localized area where the separation occurred. By way of non-limiting example, the core layer 10 and/or the adhesive core 16 is characterized by a minimum elongation of about 150%. In a preferred example, the core layer 10 and/or the adhesive core 16 is characterized by a minimum elongation of about 300%, and in a more preferred example, an elongation in the range of about 300% to 400%. Preferably, a minimum elongation ratio of about ten (10) is maintained for the laminate structure 100, where the elongation ratio is expressed as the elongation of the core layer 16 relative to (divided by) the elongation of the thinner of the aluminum sheets 12, 14, to prevent fracture of the core layer 16 and maintain the damping capacity of the laminate structure 100. In a more preferred example, the laminate structure 100 is characterized by a minimum elongation ratio of about twenty (20). In a most preferred example, the laminate structure 100 is characterized by a minimum elongation ratio in the range of about twenty (20) to thirty (30). In one example, the laminate structure 100 includes 5XXX series aluminum sheets 12, 14 each having a thickness T1, T2 of 0.80 mm and an elongation in the range of about 18% to 22% and a modified rubber adhesive core 16 having a nominal thickness T3 of 0.025 mm and an elongation of about 300% such that the example laminate structure 100 is characterized by an elongation ratio of about 13.6 to 16.7.

In a preferred example for forming the core layer 16 and laminate structure 100, an adhesive material 38 is selected, applied to one or both of the aluminum sheets 12, 14, cured and laminated to provide a laminate structure 100 which is characterized by an adhesive strength as measured by T-peel of at least ten pounds-force/inch (10 lbf/in or approximately 1.75 Newtons/millimeter (N/mm)) using a T-peel strength test performed for example, in compliance with ASTM D1876 at a 10 inch/minute pull rate, a lap shear strength of at least two mega Pascal (2 MPa) a lap shear strength test performed for example, in compliance with ASTM D1002, a yield strength of 100-120 kilo-pounds per square inch (KSI) with an ultimate tensile strength of 200-250 KSI where plastic failure of at least one of the aluminum sheets 12, 14 occurs prior to plastic failure of the adhesive core 16. In a most preferred example, the laminate structure 100 is characterized by an adhesive strength as measured by T-peel of at least fifteen foot-pounds/inch (15 lbf/in or approximately 2.63 N/mm).

In a preferred example, the laminated structure 100 retains a minimum of 80% of the original bond strength, as indicated by lap shear strength and T-peel strength, after heat cycle aging, after thermal cycle (cold shock or cold/hot thermal cycling testing, for example, between -30 degrees C and +105 degrees C) testing, and after cyclic corrosion testing (for example, SAE J2334 testing), where the criteria for each of these is application specific for the intended use of the laminate structure 100 or a component formed therefrom. In one example, the laminate structure 100 is characterized by retaining greater than 80% of the original bond strength after being subjected to heat cycle aging at 205 degrees Celsius for 40 minutes, to provide a laminate structure 100 which can be subjected during a coating process cycle such as electro-coating (electrostatic coating or E-coat) cycle or painting cycle to a baking operation where the laminate structure 100 is heated in a paint or e-coat oven in excess of 100 degrees Celsius and up to 205 degrees Celsius, without degradation of the laminate structure 100 or component formed therefrom. For example, such a laminate structure 100 is suitable for forming into an automotive component such as a dash panel, etc., which may be e-coated or painted. In the preferred example, the laminate structure 100 is able to withstand a 90 degree IT radius bend at 0.75 inch flange length without degradation, where T is the thickness of the laminate structure 100 expressed in inches, where in the present example the laminate structure 100 includes aluminum sheets 12, 14 made of 5xxx series aluminum material and an adhesive core 16 made of modified rubber, the laminate structure 100 having a total thickness of approximately 0.072 inches. In a preferred example, a laminate structure 100 includes aluminum sheets 12, 14 made of 5xxx series aluminum material with an "O" temper to provide high elongation with relatively low tensile strength such that minimal springback occurs during and after forming of a component from the laminate structure 100, e.g., such that the laminate structure 100 exhibits forming characteristics similar to a deep draw grade ferrous material.

The laminate structure 100 exhibits a bending rigidity at room temperature (approximately 23 degrees Celsius) which is at least 35% that of a solid (monolithic) aluminum sheet having a thickness equal to the combined thickness (T1+T2) of the aluminum sheets 10, 12. In a preferred example, the laminate structure 100 exhibits a bending rigidity at room temperature of 50% or more relative to a monolithic aluminum sheet having a thickness equal to the combined thickness (T1+T2) of the aluminum sheets 10, 12. In a more preferred example, the laminate structure 100 exhibits a minimum bending rigidity at room temperature of about 60% to 75% of that of a monolithic aluminum sheet having a thickness equal to the combined thickness (T1+T2) of the aluminum sheets 10, 12.

As shown in FIG. 1, the core layer 10 may include one or more intermediate coating or treatment layers 22, 24 which may be referred to herein as intermediate layers 22, 24. In the example shown, a first intermediate layer 22 is disposed between the adhesive core 16 and the aluminum sheet 12 such that the intermediate layer 22 spans substantially the entirety of (i.e., is coextensive with) the aluminum sheet 12 and the adhesive core 16, and a second intermediate layer 24 is disposed between the adhesive core 16 and the aluminum sheet 14 such that the intermediate layer 24 spans substantially the entirety of (i.e., is coextensive with) the aluminum sheet 14 and the adhesive core 16. The example shown in FIG. 1 is non-limiting, and it would be understood that the laminate structure 100 may be constructed including both of the intermediate layers 22, 24, one of the intermediate layers 22, 24, or neither of these. The intermediate layer 22, 24 prepares the surface of the respective aluminum sheet 12, 14 to which it is applied, to passivate the surface of the aluminum sheet 12, 14 to increase the surface bonding potential of the respective aluminum sheet 12, 14 to bond with the adhesive material 38 of the adhesive core 16, and/or to resist corrosion at the bond interface between the adhesive core 16 and the respective aluminum sheet 12, 14 to prevent degradation of the bond between the adhesive core 16 and the respective aluminum sheet 12, 14, for example, by preventing formation of a corrosion product at the bond interface.

The aluminum sheet 12, 14 may be prepared, e.g., pretreated, prior to applying the intermediate layer 22, 24 by cleaning the aluminum sheet 12, 14 with a deoxidation cleaner such as an alkaline cleaner or an acidic cleaner to remove soil, oil, grease, etc. from the surface of the aluminum sheet 12,14 and to remove any aluminum oxide product from the surface of the aluminum sheet 12, 14, to prepare the surface of the aluminum sheet 12, 14 to receive the intermediate layer 22, 24. As such, the deoxidation cleaner creates a "fresh" aluminum surface which, if not subsequently treated, e.g., coated, within a period of time, will reoxidize. As such, the deoxidation cleaner removes the oxide layer from surface of the aluminum sheet 12, 14 to temporarily increase bonding receptivity of the aluminum sheet, for example, to one of the layers 22, 24, 24, 32 described further herein. In a non-limiting example, the aluminum sheet 12, 14 may be cleaned and/or pretreated applying the cleaning solution using, for example, immersion cleaning, spray cleaning, rolling on the cleaning solution, or using other suitable chemical cleaning means to apply the deoxidation cleaner. In another example, the aluminum sheet 12, 14 may be mechanically cleaned to deoxidize, e.g., remove the oxide layer from, the surfaces of the aluminum sheet 12, 14.

In one example, the intermediate coating 22, 24 may be applied at a coating weight thickness (CWT) in the range of about 2.0 to 10.0 milligram/square meter (mg/m²) by spraying the intermediate coating 22, 24 in solution form onto the aluminum sheets 12, 14 or immersing the aluminum sheets 12, 14 in the coating solution. In one example, the intermediate coating 22, 24 is applied as a solution containing titanium and zirconium which passivates the aluminum surface of the aluminum sheet 12, 14, and prevents activation of the aluminum surface over time. In another example, the intermediate coating 22, 24 is applied as a solution containing tri-chromium oxide. The coating solution may also be applied to the exterior surfaces, e.g., the outwardly facing surfaces, of the aluminum sheets 12, 14 to form exterior coating layers 28, 26, as shown in FIG. 2, to passivate and/or increase the surface bonding potential of the exterior (outwardly facing) surface of the aluminum sheet 12, 14, as a pretreatment for further coating and/or painting of the laminate structure 100 or a component formed therefrom, and/or to provide a corrosion prevention coating 26, 28 on the laminate structure 100.

As shown in FIG. 3, an auxiliary coating layer 30, 32 may be applied between the intermediate layer 22, 24 and the core layer 16 such that the auxiliary coating layer 30, 32 spans substantially the entirety of (i.e., is coextensive with) the core layer 16. Each of the auxiliary coating layers 30, 32 may also be referred to herein as an auxiliary layer 30, 32. In one example, the auxiliary layer 30, 32 may be a titanium and zirconium containing coating similar to the passivation layer 22, 24, such that the laminate structure 100 includes first and second layers 22, 30 between the adhesive core 16 and the aluminum sheet 12 and first and second layers 24, 32 between the adhesive core 16 and the aluminum sheet 14, where the dual layering of the titanium-zirconium containing layers 22, 30 and 24, 32 first passivates the aluminum surface then increases the receptivity of bonding of the adhesive core 16 to the aluminum sheet 12, 14. The increased receptivity provided by the dual layering increases the bond strength at the bond interface between the adhesive core 16 and the aluminum sheet 12, 14 resulting in a relatively higher peel strength, for example, greater than 10 lbf/in, while retaining the desired damping performance, for example, a CLF of greater than 0.1 within +/-10 degrees Celsius of the target operating (in use) temperature of the laminate structure 100 and/or a component formed therefrom.

In one example, the laminate structure 100 may include at least one of the auxiliary layer 30, 32 which is a corrosion prevention layer to prevent contaminant ingression at the bonded interface between the adhesive core 16 and the adjacent aluminum sheet 12, 14, for example, by preventing contaminant ingression at an exposed edge of the laminate structure 100. In another example, the laminate structure 100 may include at least one auxiliary layer 30, 32 configured as a thermal coating to modify the thermal emissivity and/or thermal conductivity of the laminate structure 100. For example, at least one auxiliary layer 30, 32 may be made of a heat dissipating material to dissipate heat away from the adhesive core 16, or may be made of a heat absorptive material to absorb heat into the laminate structure 100. In another example, the laminate structure 100 may include at least one auxiliary layer 30, 32 configured as an electrically conductive layer to modify the electrical conductivity of the laminate structure 100. For example, the laminate structure 100 shown in FIG. 3 could include auxiliary layers 30, 32 which are made of or include an electrically conductive material, such as a carbon-based or graphite-based material or graphite film, and could further include an adhesive core as shown in FIGS. 4 and 5, where the adhesive core 16 includes an electrically conductive filler 36 such that the adhesive core and the auxiliary layers 30, 32 are electrically conductive and the laminate structure 100 is electrically conductive. The example shown in FIG. 3 is non-limiting, and it would be understood that the laminate structure 100 may be configured with one or both auxiliary layers 30, 32, with a plurality of auxiliary layers 30 disposed between the adhesive core 16 and the aluminum sheet 12, with a plurality of auxiliary layers 32 disposed between the adhesive core 16 and the aluminum sheet 14, and/or without either auxiliary layer 30, 32. It would be understood that each of the auxiliary layers 30, 32 may be similarly configured, e.g., be made of the same material and/or have the same thickness, or may be differently configured, e.g., made of different materials and/or have different thicknesses and/or be included to provide different functionalities (corrosion prevention, thermal conductivity, electrical conductivity, etc.) to the laminate structure 100.

Referring to FIG. 2, the laminate structure 100 may include one or more exterior coating layers 26, 28, which may be referred to herein as exterior coatings 26, 28 and/or as exterior layers 26, 28. In the example shown, an exterior layer 28 is applied to, e.g., bonded, adhered, laminated or otherwise attached to, the exterior (outwardly facing or outermost) surface of the aluminum sheet 12 such that the exterior layer 28 spans substantially the entirety of (i.e., is coextensive with) the aluminum sheet 12, and an exterior layer 26 is applied to, e.g., bonded, adhered, laminated or otherwise attached to the exterior (outwardly facing or outermost) surface of the aluminum sheet 14 such that the exterior layer 28 spans substantially the entirety of (i.e., is coextensive with) the aluminum sheet 12. The example shown in FIG. 2 is non-limiting, and it would be understood that the laminate structure 100 could be configured with one, both, or neither of the exterior layers 26, 28. The exterior coating layers 28, 26 may be configured to passivate and/or increase the surface bonding potential of the exterior (outwardly facing) surface of the aluminum sheet 12, 14, as a pretreatment for further coating and/or painting of the exterior surfaces of the laminate structure 100 or a component formed therefrom, and/or to provide a corrosion prevention coating 26, 28 on the laminate structure 100. The laminate structure 100 can include a plurality of exterior layers 26 and/or a plurality of exterior layers 28 applied in a predetermined sequence. By way of non-limiting example, the laminate structure 100 could include a first exterior layer 28 applied to, e.g., bonded, to the aluminum sheet 12, as a pretreatment for further coating and/or painting of the exterior (outwardly facing) surface of the aluminum sheet 12 with an additional exterior layer 28 which may be, by way of non-limiting example, a paint layer, a decorative coating layer, a corrosion protection layer, a thermal coating layer, etc. In one example, the exterior layer 26, 28 is a heat reflective thermal coating layer, such as a solar reflective layer, to reflect heat from and/or decrease heat absorption into the laminate structure 100. In another example, the exterior layer 26, 28 is a heat absorptive thermal coating layer, such as a low emissivity coating layer or black paint layer, to increase heat absorption into the laminate structure 100.

In one example, at least one of the exterior layers 26, 28 may be configured as an isolation layer 34, as shown in FIG. 4, where an "isolation layer" as that term is used herein, is a layer of material bonded to the laminate structure 100 to form an exterior layer of the laminate structure 100, and configured to prevent corrosion of the laminate structure 100 and/or to protect the aluminum layers 12, 14 to which the isolation layer 34 is applied, for example, from chemical attack and/or exposure to contaminants. In one example, the isolation layer 34 is configured to prevent galvanic corrosion when the laminate structure 100 and/or a component formed therefrom is in contact with, connected and/or fastened to a steel component. The isolation layer 34 may also be referred to herein as a galvanic isolation layer 34. In one example, the galvanic isolation layer 34 can consist of a polymer binder with zinc particles disbursed and embedded therein, with the polymer layer preventing corrosion by preventing ion transfer through the isolation layer, and the zinc particles preferentially, e.g., sacrificially, absorbing ions to prevent corrosion of the aluminum sheet 12,14. The examples shown in the figures are non-limiting. For example, an exterior layer 26, 28 may be disposed between the aluminum sheet 14, 12 and a galvanic isolation layer 34. By way of example, the galvanic isolation layer 34 may be applied to one or both exterior surfaces of the laminate structure 100.In one example, organic coatings, including zinc rich primer coatings such as Granocoat® or Bonazinc™ and/or modified epoxy or polyester based weldable paints and/or primers may be used to form the isolation layer 34.

By way of non-limiting example, a method of forming the laminate structure 100 includes presenting the various layers required to form the laminate structure 100 in the required sequence to a laminating process which includes applying a laminating pressure to the sequenced layers and curing the layered structure such that the layers are bonded together to form the laminate structure 100. By way of non-limiting and illustrative example and referring to FIG. 2, the laminate structure 100 is formed by cleaning the aluminum sheets 12, 14, as previously described herein, to deoxidize the surfaces of the aluminum sheets 12, 14. The inwardly facing surfaces of the aluminum sheets 12, 14, e.g., the surfaces which are to be bonded to the adhesive core 16, are respectively coated with the intermediate layers 22, 24, for example by spray, roller and/or immersion application of the coating material forming the intermediate layers 22, 24, such that the coating material covers the entire surface of the aluminum sheet 12, 14, e.g., is coextensive with the surface of the aluminum sheet 12, 14. In one example, coating material may be applied to the exterior (outwardly facing) surfaces of the aluminum sheets 12, 14 to form the exterior layers 28, 26, for example, by spray, roller and/or immersion application.

Still referring to the illustrative example shown in FIG. 2, and after forming the intermediate layers 22, 24, the exterior layers 28, 26 on the aluminum sheets 12, 14, the adhesive material 38 forming the adhesive core 16 is applied in two layers 18, 20, for example, by spraying or rolling, or may be applied as a dry adhesive film. The aluminum sheet 12 and the aluminum sheet 14, sequenced as shown in FIG. 2, are presented to the laminating process, e.g., to laminating rolls such that the adhesive layers 18, 20 are facing, e.g., are brought in contact with each other, and laminated by applying a laminating pressure, for example, via the laminating rolls, to form the laminate structure 100. Alternately, as shown in FIG. 1 and previously described herein, the adhesive material 38 forming the adhesive core 16 may be applied in a single layer to one of the intermediate layers 22, 24. The laminate structure 100 is cured by elevating the temperature of the aluminum sheets 12, 14 and the adhesive core 16, for example, using one or more ovens, flame bars, heated lamination rolls, etc. during and/or after the lamination process forming the laminate structure 100.

Following the lamination process, e.g., after laminating and curing the sequenced layers forming the laminate structure 100, the laminate structure 100 may be subjected to additional treatments, including, as previously described herein, the application of one or more of the exterior layers 26, 28, 34. The laminate structure 100 may be used to form components therefrom. For example, the laminate structure 100 may be cut, stamped, pressed, bent, extruded, punched, drilled, etc. to form a component, where the component may define one or a combination of one or more bends, fillets, chamfers, shoulders, openings, holes, slots, ribs, flanges, hems, etc. By way of non-limiting example, the laminate structure 100 may be used to form a variety of structural components which may be used in vehicles, such as a dash panel, package tray, panel shelf, seat panel, cowl panel, instrument panel frame, floor panel, tunnel panel, wheel well, back-up panel, trunk panel, etc. The examples are non-limiting, and it would be understood that various components which may be structural or non-structural components, may be formed using the laminate structure 100 described herein.

Referring to FIG. 4 and 5, the adhesive core 16 includes filler particles 36 distributed in the adhesive material 38 forming the adhesive core 16. The size, shape, configuration, material, density and dispersion pattern of the filler particles 36 may be selected to provide a desired functional attribute of the core layer 10 and/or the adhesive core 16. The filler particles 36 may be configured to modify the thermal conductivity of the laminate structure 100.

In the example shown in FIG. 5, the filler particles 36 distributed in the adhesive core 16 are electrically conductive to form an electrically conductive core layer 10 and electrically conductive laminate structure 100. For simplicity of illustration, the core layer 10 is shown in FIG. 5 as consisting of the adhesive layer 16, and it would be understood that the core layer 10 may further include one or more intermediate layers 22, 24 and/or one or more auxiliary layers 30, 32 as previously described herein. In the example shown, the filler particles 36 are provided in a size and/or shape and are dispersed in the adhesive core 16 at a density and/or dispersion pattern such that the electrically conductive filler particles 36 provide a conductive path through the adhesive core 16 to form an electrically conductive laminate structure 100. It would be appreciated that a uniform dispersion of filler particles 36 is desirable to provide a uniform conductive path through the laminate structure 100 when passing an electrical current through the laminate structure 100, for example, during a welding operation as shown in FIG. 5, to prevent electrical shunting and/or current jumping. Electrical shunting and/or current jumping could occur, for example, due to a non-uniform dispersion of electrically conductive filler particles 36 in the core layer 10, resultant for example from insufficient mixing, clumping, and/or settling of the filler particles 36 in the adhesive core 16 during forming of the core layer 10. As such, the filler particles 36 may be coated, for example, with a wetting agent and/or surfactant coating, to promote uniform mixing of the filler particles 36 in the adhesive material 38 forming the adhesive core 16, and to prevent sinking or clumping of the filler particles 36 in the core layer 10 during forming of the laminate structure 100, such that a uniform dispersion of the filler particles 36 is maintained throughout the thickness of the core layer 10 after forming of the laminate structure 100.

Referring to FIG. 5, shown is an illustrative welding operation for forming a weld in a weld zone 62 to join a laminate structure 100 to metal component 50, to form a welded assembly 60. In the non-limiting example shown, the laminate structure 100 and metal component 50 are stacked and positioned between welding electrodes 52, such that each welding electrode 52 is in contact with a respective one of the laminate structure 100 and the metal component 50 to define a weld zone 62 therebetween. An electrical current is supplied to the electrodes 52 such that current flows between the electrodes 52 through the weld zone 62, via a current path determined by the aluminum sheets 12, 14, the metal component 50, and the conductive path defined by the dispersion of filler particles 36 in the core layer 10. The duration and magnitude of the current flow applied to the weld zone 62 is controlled such that resistive heat is generated by the current flow through the aluminum sheets 12, 14, the metal component 50, and the dispersion of filler particles 36, to heat the materials in the weld zone 62 sufficiently to partially and preferably completely melt the metallic materials in the weld zone 62 to form a weld in the weld zone 62, which when solidified upon cooling joins the laminate structure 100 and the metal component 50 to form the welded assembly 60. A resistive welding process is shown in the FIG. 5 as an illustrative example, and it would be understood any of various conventional welding processes could be used to join the laminate structure 100 described herein to another metal component, including without limitation resistive welding processes including spot welding, seam welding, flash welding, projection welding, upset welding; energy beam welding including laser beam welding, electron beam welding, laser hybrid welding; gas welding including oxyfuel welding; arc welding including gas metal arc welding, metal inert gas welding, or shielded metal arc welding.

In the illustrative example, the metal component 50 may be, for example, a monolithic component made of a metal such as aluminum or other metal weldable to the laminate structure 100. In another example, the metal component 50 may be a laminate structure such as a laminate structure 100 described herein. For simplicity of illustration, the example illustrated in FIG. 5 shows two components 100, 50 stacked for welding to form the welded assembly 60. This example is non-limiting, and it would be understood that multiple components, e.g., three or more including at least one component formed as a laminate structure 100, could be stacked and positioned between the weld electrodes 52 and joined by forming a weld between the three or more components in the weld zone 62.

In the embodiment according to the invention described herein, the electrically conductive filler particles 36 are composed of at least two filler materials, illustratively shown in FIG. 5 as filler materials 54, 56, 58 where each of the filler materials 54, 56, 58 is different from another of the filler materials 54, 56, 58. The first example described herein, which is not according to the invention, illustrates the inability to weld a laminate structure 100 where the filler particles 36 are made of a single filler material, which in the illustrative first example is aluminum. The remaining examples are illustrative that a weld is formable in a laminate structure 100 with filler particles 36 comprised of two different materials 54, 56, and of three different materials 54, 56, 58. It would be understood that the filler particles 36 could be made of more than three different filler materials. The filler particles 36 are configured and dispersed in the adhesive core 16 at an additive level to meet at least two criteria for proper weld formation. As a first criteria, the filler particles 36 should be configured and dispersed in the adhesive core 16 at an additive level to provide an electrically conductive path through adhesive core 16 which is characterized by sufficient resistivity to generate the resistive heat required to melt material in the weld zone 62 during weld formation, while exhibiting sufficient conductivity to allow current passage without expulsion or formation of weld faults during the welding process, to form an "acceptable weld." For example, the filler particles 36 should be dispersed in the core material 38 such that clumping and/or settling of the filler particles 36 is avoided, to avoid shunting and/or current jumping outside of the weld zone 62. An "acceptable weld" as that term is used herein, is a weld which will meet the performance requirements of the welded assembly 60, including for example, weld nugget size, weld shear strength, fatigue resistance, corrosion resistance including resistance to corrosion after processing to apply E-coat, and resistance to galvanic corrosion. An "acceptable weld" is characterized by an absence of or substantially no weld discontinuities, including an absence of or substantially no porosity, weld cracking, or other discontinuities, such as the formation of oxides or intermetallic compounds in the weld, which may negatively impact weld performance or integrity.

The second criteria for configuration of the filler particles 36 is alloying compatibility with the aluminum of the aluminum sheets 12, 14 during weld formation, e.g., the filler particles 36 should be configured and dispersed in the adhesive core 16 at an additive level which will, when combined with aluminum from the aluminum sheets 12, 14, form an acceptable weld. The filler particles 36 may be provided at an additive level which is controlled to provide, increase, and/or enhance characteristics of the weld which are favorable to formation of an acceptable weld. For example, one of the filler materials 54, 56, 58 may be copper, manganese or magnesium, included at an additive level which enhances one or more of weld ductility, strength, and/or corrosion resistance.

One or more of the filler materials 54, 56, 58 forming the filler particles 36 may be provided at an additive level which is controlled at a balanced level to provide a beneficial effect, such as increasing resistivity of the filler particle 36, while preventing a detrimental effect, such as an alloying incompatibility. For example, one of the filler materials 54, 56, 58 may be iron or nickel, included at a sufficient additive level to increase resistivity however controlled at a sufficiently low additive level to prevent the formation of intermetallic compounds in the resulting weld.

The filler particles 36 include two or more filler materials 54, 56, 58 provided in various configurations to satisfy the criteria described above. By way of non-limiting example, a filler particle 36 may be provided as a compound formed of the two or more filler materials 54, 56, 58, a mixture, such as a powder mixture, of two or more filler materials 54, 56, 58, coated particles where the particle may be formed of a first filler material 54 and coated with a second filler material 56. The filler particles 36 may be provided as a mixture of a first filler particle made of one or more of the filler materials 54, 56, 58, a second filler particle made of one or more of the filler materials 54, 56, 58 where at least one of the composition, configuration, and/or additive level of the second filler particle is different from the composition, configuration and/or additive level of the first filler particle. In this example, the mixture may include a third, fourth, etc filler particle of a different composition than each of the first and second filler particles.

A third criteria is the volume of filler particles 36 in the adhesive core 16. As the volume of filler particles 36 increases in the adhesive core 16, the bond strength may decrease proportionally. The criteria for the volume of filler particles 36 is to limit the volume of filler particles 36 in the adhesive core 16 to a level such that the bond strength of the laminate structure 100 including the filler particles 36 is at least 90% of the bond strength of the laminate structure 100 formed without the filler particles 36. The volume of filler particles 36 in the core layer 10 can be expressed as a volume percentage and/or as a corresponding weight percentage based on the configuration and density of the filler particles 36. In one example, the volume of electrically conductive filler particles 36 is preferably less than 18% of the total volume of the core layer 10 and less than 50% of the total weight of the core layer 10. In a more preferred example, volume of electrically conductive filler particles 36 is preferably less than 10% of the total volume of the core layer 10 and less than 30% of the total weight of the core layer 10.

### EXAMPLES

### Example 1

Example 1, which is not according to the invention, is a laminate structure 100 including a core layer 10 including filler particles 36 made of aluminum material containing at least 99.8% aluminum (Al), such that the material chemistry and the electric potential of the filler particles 36 are substantially similar to that of the aluminum sheets 12, 14. The aluminum filler particles 36 are distributed in the adhesive material 36 at an additive level expressed as a percentage weight of the adhesive core 16 in the range of about 5 % to 20 %, and preferably, at a percentage weight in the range of about 5% to 10%. In this example, the laminate structure 100 having a total thickness T (T1+T2+T3) as shown in FIG. 1) was stacked to a solid aluminum component 50 made of 6061-T6 aluminum alloy having a thickness of 0.8 mm and current was supplied to weld electrodes 62 in contact with each of the laminate structure 100 and the solid aluminum component 50. Surprisingly, current does not pass through the laminate structure 100 containing the aluminum filler particles 36, and no weld is formed. It was observed that exposure of the aluminum filler particles 36 prior and/or during addition of the filler particles 36 to the adhesive material 38 could result in formation of an electrically insulating aluminum oxide on the surface of the filler particles 36, preventing current flow and preventing weld formation.

### Example 2

Example 2 (being an embodiment of the invention) is a laminate structure 100 including a core layer 10 including filler particles 36 made of a first filler material 54 which is aluminum (Al) and a second filler material 56 which is zinc (Zn). The filler particles 36 are configured as aluminum particles which are coated with zinc using a zincating process. During the zincating process, the aluminum particles are deoxidized prior to coating with the zinc, such that aluminum oxide is not present in the filler particles 36. The aluminum and the zinc are electrically conductive and zinc has a relatively higher resistivity than aluminum, such that the filler particles 36 made of zincated (zinc coated) aluminum particles provide an electrically conductive path through the core layer 10, which has sufficiently high resistivity to generate heat when electrical current is passed through the laminate structure 100 during a welding operation. The zincated aluminum filler particles 36 are distributed in the adhesive material 36 at an additive level expressed as a percentage weight of the adhesive core 16 in the range of about 15% to 25% of the total weight of the adhesive core 16. The volume of zincated aluminum filler particles 36 distributed in the core layer 10 is within the range of about 6% to 15% of the total volume of the core layer 10, and preferably within the range of about 6% to 10% of the total volume of the core layer 10. In this example, the laminate structure 100 having a total thickness T (T1+T2+T3 as shown in FIG. 1) is welded to a solid aluminum component 50 made of 6061-T6 aluminum alloy having a thickness of 0.8 mm by passing current through the stacked laminate structure 100 and aluminum component 50 to form an acceptable weld nugget.

### Example 3

Example 3 being an embodiment of the invention is a laminate structure 100 including a core layer 10 including filler particles 36 made of a first filler material 54 which is iron (Fe) and a second filler material 56 which is phosphorus (P). The filler particles 36 are configured as a compound form of iron phosphides (FeP, Fe2P) provided as a powder having a particle size of in the range of about 5 micron to 125 micron, with a median particle size of about 25 micron. The iron is electrically conductive and has a relatively higher resistivity than aluminum, such that the filler particles 36 made of the iron phosphorus compound provide an electrically conductive path through the core layer 10, which has sufficiently high resistivity to generate heat when electrical current is passed through the laminate structure 100 during a welding operation. Of significance, both iron and phosphorus have very low solubility in aluminum in the solid state (∼0.04% for iron and <0.01% for phosphorus), such that both iron and phosphorus are considered an impurity in aluminum. Unexpectedly, when the additive level of the filler particles 36, e.g., the additive level of the iron and phosphorus filler materials in combination, is controlled for alloying compatibility at a percentage weight in the range of about 12% to 49% of the adhesive core 16, and preferably, at a percentage weight in the range of about 20% to 30%, the laminate structure 100 is weldable to a solid (monolithic) aluminum component 50 to form an acceptable weld nugget. Surprisingly, the weld nugget is formed without propagation of iron phosphorus out of the weld in a sufficient quantity to cause adverse effects to the weld nugget, suggesting the iron and phosphorus at this additive level remains in solution in the weld nugget thus formed. In this example, the laminate structure 100 having a total thickness T (T1+T2+T3 as shown in FIG. 1) is welded to a solid aluminum component 50 made of 6061-T6 aluminum alloy having a thickness of 0.8 mm by passing current through the stacked laminate structure 100 and aluminum component 50 to form a weld nugget measuring between 3.5 mm and 5 mm, using an alternating current (AC) resistance welder. No shunting of current between the outer layers 12, 14 of the laminate structure 10 is observed. Minimal discontinuities are observed during visual examination of a cross-section of the weld nugget. Tensile shear data showed all welds tested broke in the parent metal in the heat affected zone (HAZ). Corrosion testing of coated and non-coated welded assemblies shows no corrosion which would be detrimental to weld integrity.

### Example 4

Example 4, which is not according to the invention, is a laminate structure 100 including a core layer 10 including filler particles 36 made of a first filler material 54 which is zinc (Zn) and a second filler material 56 configured as a plurality of hollow carrier objects. The filler particles 36 are provided as the carrier objects coated with zinc. The carrier objects in this example are hollow glass spheres. The zinc is electrically conductive and has a relatively higher resistivity than aluminum, such that the filler particles 36 made of the zinc coated glass spheres provide an electrically conductive path through the core layer 10, which has sufficiently high resistivity to generate heat when electrical current is passed through the laminate structure 100 during a welding operation. The additive level of zinc coated glass spheres (filler particles 36) is controlled for alloying compatibility at a percentage weight in the range of about 8% to 30% of the adhesive core 16, and preferably, at a percentage weight in the range of about 10% to 20%, and the laminate structure 100 is weldable to a solid (monolithic) aluminum component 50 to form an acceptable weld nugget. In this example, the laminate structure 100 having a total thickness T (T1+T2+T3 as shown in FIG. 1) is welded to a solid aluminum component 50 made of 6061-T6 aluminum alloy having a thickness of 0.8 mm by passing current through the stacked laminate structure 100 and aluminum component 50 to form a weld nugget measuring between 3.5 mm and 5 mm, using an alternating current (AC) resistance welder. No shunting of current between the outer layers 12, 14 of the laminate structure 10 is observed. In this example, the diameter of the zinc coated glass spheres ranged in size from a diameter substantially the same thickness (T3 in FIG. 1) of the adhesive core 16, which in the present example is 30 microns, or less. The zinc coating on the glass spheres having a diameter of 30 microns, e.g., having a diameter substantially equal to the thickness of the adhesive core 16, provided a conductive bridge between the first and second aluminum layers 12, 14 to define a conductive path through the laminate structure 100. Zinc coated glass spheres having a diameter of less than 30 microns are distributed in the adhesive core 16 such that a conductive path is defined by the points of closest contact between adjacent spheres. The laminate structure 100 is advantaged by a lower density provided by the hollow glass spheres, which also contribute to increased rigidity and crush resistance of the core layer 10.

### Example 5

Example 5, which is not according to the invention, is prepared using the same method as Example 4, except the first filler material 54 is a silver (Ag) coating applied to the hollow glass spheres forming the second filler material 56, to provide filler particles 36 configured as silver coated glass spheres. An acceptable weld nugget measuring between 3.5 mm and 5 mm, using an alternating current (AC) resistance welder is formed. No shunting of current between the outer layers 12, 14 of the laminate structure 10 is observed.

### Example 6

Example 6, which is not according to the invention, is prepared using the same method as Example 4, except the first filler material 54 is a nickel (Ni) coating applied to the hollow glass spheres forming the second filler material 56, to provide filler particles 36 configured as nickel coated glass spheres. An acceptable weld nugget measuring between 3.5 mm and 5 mm, using an alternating current (AC) resistance welder is formed. No shunting of current between the outer layers 12, 14 of the laminate structure 10 is observed.

### Example 7

Example 7 being an embodiment of the invention a laminate structure 100 including a core layer 10 including filler particles 36 made of a first filler material 54 which is magnesium (Mg) and a second filler material 56 which is magnesium oxide (MgO). The filler particles 36 are configured as a mixture of magnesium particles and magnesium oxide particles. The magnesium is electrically conductive and has a relatively higher resistivity than aluminum, and the magnesium oxide has a high resistivity such that the filler particles 36 made of the mixture of magnesium particles and magnesium oxide particles provide an electrically conductive path through the core layer 10 which has sufficiently high resistivity to generate heat when electrical current is passed through the laminate structure 100 during a welding operation. Magnesium has good alloying compatibility with aluminum, with excellent weldability and is not prone to hot-cracking. In this example, the laminate structure 100 having a total thickness T (T1+T2+T3 as shown in FIG. 1) is welded to a solid aluminum component 50 made of 6061-T6 aluminum alloy having a thickness of 0.8 mm by passing current through the stacked laminate structure 100 and aluminum component 50 to form an acceptable weld nugget which is absent of porosity and crack free.

### Example 8

Example 8 is prepared using the same method as Example 7, except the second filler material 56 is manganese dioxide (MnO₂). The filler particles 36 are configured as a mixture of magnesium particles and manganese dioxide particles. Manganese dioxide has a high resistivity such that the filler particles 36 made of the mixture of magnesium particles and manganese dioxide particles provide an electrically conductive path through the core layer 10 which has sufficiently high resistivity to generate heat when electrical current is passed through the laminate structure 100 during a welding operation. Manganese has good alloying compatibility with aluminum, with good weldability, providing good ductility and improved corrosion properties to the weld. An acceptable weld nugget which is absent of porosity and crack free is formed using this Example.

### Example 9

Example 9 is a laminate structure 100 including a core layer 10 including filler particles 36 made of mixture of a first filler material 54 which is manganese dioxide (MnO₂), a second filler material 56 which is magnesium (Mg), and a third filler material 58 which is aluminum (Al). The filler particles 36 are mixed to form a powder. The magnesium and aluminum have good electrical conductivity. The magnesium and the manganese dioxide have relatively higher resistivity than aluminum, such that the filler particles 36 made of the mixture of manganese dioxide, magnesium and aluminum provide an electrically conductive path through the core layer 10, which has sufficiently high resistivity to generate heat when electrical current is passed through the laminate structure 100 during a welding operation. As described for Examples 6 and 7, both magnesium and manganese have good alloying compatibility with aluminum. The additive level of filler particles 36, e.g., the additive level of the mixture of filler materials 54, 56, 58 is at a percentage weight in the range of about 12% to 49% of the adhesive core 16, and preferably, at a percentage weight in the range of about 20% to 30%, and the laminate structure 100 is weldable to a solid (monolithic) aluminum component 50 to form an acceptable weld nugget. In this example, the laminate structure 100 having a total thickness T (T1+T2+T3 as shown in FIG. 1) is welded to a solid aluminum component 50 made of 6061-T6 aluminum alloy having a thickness of 0.8 mm by passing current through the stacked laminate structure 100 and aluminum component 50 to form a weld nugget measuring between 3.5 mm and 5 mm, using an alternating current (AC) resistance welder. No shunting of current between the outer layers 12, 14 of the laminate structure 10 is observed.

### Example 10

Example 10 is prepared using the same method as Example 9, except the second filler material 56 is silicon (Si), which has relatively higher resistivity than aluminum, such that the filler particles 36 made of the mixture of manganese dioxide, silicon and aluminum provide an electrically conductive path through the core layer 10, which has sufficiently high resistivity to generate heat when electrical current is passed through the laminate structure 100 during a welding operation. A weld nugget measuring between 3.5 mm and 5 mm was formed, and no shunting of current between the outer layers 12, 14 of the laminate structure 10 is observed.

### Example 11

Example 11 is prepared using the same method as Example 9, except the third filler material 58 is zinc, which has relatively higher resistivity than aluminum and good alloying compatibility with aluminum, such that the filler particles 36 made of the mixture of manganese dioxide, silicon and zinc provide an electrically conductive path through the core layer 10, which has sufficiently high resistivity to generate heat when electrical current is passed through the laminate structure 100 during a welding operation. A weld nugget measuring between 3.5 mm and 5 mm was formed, and no shunting of current between the outer layers 12, 14 of the laminate structure 100 is observed.

Referring to Example 7, it is envisioned that similar results as to weldability of the laminate 100 can be achieved using filler particles 36 comprised of a first conductive metal 54 which shows good alloying compatibility with aluminum, such as one or more of a group consisting of manganese, silicon and copper, and a second conductive metal 56 which is the oxidized counterpart of the metal 54. In an example not according to the invention, a laminate structure 100 including particles 36 comprising a mixture of zinc and zinc oxide is envisioned to be weldable to form a weld nugget without shunting. In another example not according to the invention, referring to Example 2, it is envisioned that the aluminum particles could be coated with another conductive material other than zinc, to provide filler particles 36 to form a laminate structure which is weldable. In yet another example not according to the invention, referring to Example 4, it is envisioned that the hollow carrier objects may be provided in a shape other than a sphere, e.g., for example, could be provided in a non-spherical ovoid shape, as a cylinder, rod, ellipsoid, etc. or other shape capable of current bridging the first and second aluminum layers 12, 14 and/or nesting in contact to provide a conductive path between the first and second aluminum layers 12, 14 when coated with a conductive material. Referring again to Example 4, it is envisioned that the hollow carrier objects can be formed of materials other than glass, for example, ceramic based materials, and/or that the conductive material coating the glass sphere may be another material which satisfies the criteria for electrical conductivity and resistance and alloying compatibility, such as nickel.

The combination of properties and/or features for which a laminate structure 100 is configured includes a combination of one or more of NVH properties, damping, elongation, tensile strength, shear strength, formability, peel strength, corrosion prevention, thermal properties, electrical conductivity, and/or weldability. The example configurations of laminate structures 100 shown in FIGS. 1-5 are non-limiting, and it would be understood that the various layers shown in the figures may be alternatively combined to provide other configurations of the laminate structure 100 not shown in the figures but included in the scope of the description.

The detailed description and the drawings or figures are supportive and descriptive of the present teachings, but the scope of the present teachings is defined solely by the claims. While some of the best modes and other embodiments for carrying out the present teachings have been described in detail, various alternative designs and embodiments exist for practicing the present teachings defined in the appended claims.

## Claims

1. A weldable laminate structure (100) comprising:
a first metal sheet (12);
a second metal sheet (14);
wherein the first and second metal sheets (12, 14) are made of an aluminum based material **characterized by** an aluminum electrical resistivity;
an adhesive core (16);
wherein the adhesive core (16) is disposed between and bonded to the first and second metal sheets (12, 14) such that the adhesive core (16) is coextensive with each of the first and second metal sheets (12, 14);
wherein the first metal sheet (12), the second metal sheet (14), and the adhesive core (16) are laminated together to form the laminate structure (100);
wherein the adhesive core (16) includes a plurality of electrically conductive filler particles (36) dispersed in an adhesive material (38);
wherein a percentage weight of the filler particles (36) is in a range of about 12% to 49% of a total weight of the adhesive core (16) and the volume of the filler particles (36) in the adhesive core (16) is such that the bond strength of the laminate structure is at least 90% of the bond strength of the laminate structure formed without the filler particles;
wherein the plurality of filler particles (36) are composed of at least a first filler material (54) and a second filler material (56) which is a different material than the first filler material (54) and the plurality of filler particles (36) are selected from a group consisting of;
a first plurality of filler particles wherein:
the first filler material (54) is a first iron phosphide compound which is composed of FeP; and
the second filler material (56) is second iron phosphide compound which is composed of Fe₂P such that the first iron phosphide compound is different than the second iron phosphide compound;
a second plurality of filler particles wherein:
the first filler material (54) is zinc;
the second filler material (56) is aluminum particles;
wherein the filler particles (36) are formed by coating the aluminum particles with the zinc;
wherein the aluminum particles are deoxidized prior to being coated by the zinc; and
wherein the percentage weight of the filler particles (36) is in a range of about 15% to 25% of the total weight of the adhesive core (16);
a third plurality of filler particles wherein:
the first filler material (54) is one of magnesium, silicon, and copper; and
the second filler material (56) is an oxide of the one of magnesium, silicon, and copper;
a fourth plurality of filler particles wherein:
the first filler material (54) is magnesium; and
the second filler material (56) is manganese dioxide; and,
a fifth plurality of filler particles, wherein the filler particles (36) include a third filler material (58) which is a different material than the first and second filler materials (54, 56), wherein:
the first filler material (54) is manganese dioxide;
the second filler material (56) is one of magnesium and silicon; and
the third filler material (58) is one of aluminum and zinc.
wherein at least one the first and second filler materials (54, 56) has a filler electrical resistivity greater than the aluminum electrical resistivity;
wherein the plurality of electrically conductive filler particles (36) defines a conduction path by which an electrical current applied to one of the first and second metal sheets (12, 14) of the laminate structure (100) is conducted through the adhesive core (16) to the other of the first and second metal sheets (12, 14) to generate a resistive heat so as to at least partially melt the first and second metal sheets (12, 14) in a weld zone including the conduction path.

2. A method of welding a weldable laminate structure (100), the method comprising
providing a weldable laminate structure (100) as claimed in claim 1;
providing a metal component (50);
stacking the weldable laminate structure (100) and the metal component (50);
flowing an electrical current through a weld zone (62) defined by the stacked weldable laminate structure (100) and the metal component (50) to produce a resistive heat sufficient to at least partially melt the first and second metal sheets (12, 14) and the metal component (50) to form a weld in the weld zone (62).

## Patentansprüche

1. Schweissbare Laminatstruktur (100), umfassend:
ein erstes Blech (12);
ein zweites Blech (14);
wobei das erste und zweite Blech (12, 14) aus einem auf Aluminium basierenden Material hergestellt sind, welches durch einen spezifischen elektrischen Widerstand von Aluminium gekennzeichnet ist;
einen Klebstoffkern (16);
wobei der Klebstoffkern (16) zwischen dem ersten und zweiten Blech (12, 14) angeordnet und mit diesen derart verbunden ist, dass der Klebstoffkern (16) mit jedem der ersten und zweiten Bleche (12, 14) flächengleich ist;
wobei das erste Blech (12), das zweite Blech (14), und der Klebstoffkern (16) zusammen verlaminiert sind, um die Laminatstruktur (100) zu bilden;
wobei der Klebstoffkern (16) eine Vielzahl von elektrisch leitenden Füllstoffpartikeln (36) aufweist, welche in einem Klebstoffmaterial (38) verteilt sind;
wobei ein prozentuales Gewicht der Füllstoffteilchen (36) in einem Bereich von etwa 12% bis 49% des Gesamtgewichts des Klebstoffkerns (16) liegt und das Volumen der Füllstoffpartikel (36) im Klebstoffkern (16) derart ist, dass die Klebekraft der Laminatstruktur mindestens 90% der Klebekraft der ohne die Füllstoffteilchen ausgestalteten Laminatstruktur, beträgt;
wobei die Vielzahl von Füllstoffpartikeln (36) aus mindestens einem ersten Füllstoffmaterial (54) und einem zweiten Füllstoffmaterial (56), welches ein zum ersten Füllstoffmaterial (54) unterschiedliches Material ist, zusammengesetzt ist und die Vielzahl von Füllstoffpartikeln (36) aus einer Gruppe ausgewählt ist, welche bestehend ist aus:
einer ersten Vielzahl von Füllstoffpartikeln, wobei:
das erste Füllstoffmaterial (54) eine erste Eisenphosphid-Verbindung ist, welche ist aus FeP zusammengestellt ist; und
das zweite Füllstoffmaterial (56) eine zweite Eisenphosphid-Verbindung ist, welche aus Fe₂P derart zusammengesetzt ist, dass die erste Eisenphosphid-Verbindung unterschiedlich zur zweiten Eisenphosphid-Verbindung ist;
einer zweiten Vielzahl von Füllstoffpartikeln, wobei:
das erste Füllstoffmaterial (54) Zink ist;
das zweite Füllstoffmaterial (56) Aluminiumpartikel ist;
wobei die Füllstoffpartikel (36) durch Beschichten der Aluminiumpartikel mit dem Zink gebildet sind;
wobei die Aluminiumpartikel vor dem Beschichten mit dem Zink deoxidiert werden; und
wobei das prozentuale Gewicht der Füllstoffpartikel (36) in einem Bereich von etwa 15% bis 25% des Gesamtgewichts des Klebstoffkerns (16) liegt;
einer dritten Vielzahl von Füllstoffpartikeln, wobei:
das erste Füllstoffmaterial (54) eines von Magnesium, Silizium, und Kupfer ist; und
das zweite Füllstoffmaterial (56) ein Oxid ist aus einem von Magnesium, Silizium, und Kupfer;
eine vierte Vielzahl von Füllstoffpartikeln, wobei:
das erste Füllstoffmaterial (54) Magnesium ist; und
das zweite Füllstoffmaterial (56) Mangandioxid ist; und,
eine fünfte Vielzahl von Füllstoffpartikeln, wobei die Füllstoffpartikel (36) ein drittes Füllstoffmaterial (58) beinhalten, welches ein zu den ersten und zweiten Füllstoffmaterialien (54, 56) unterschiedliches Material ist, wobei:
das erste Füllstoffmaterial (54) Mangandioxid ist;
das zweite Füllstoffmaterial (56) eines von Magnesium und Silizium ist; und
das dritte Füllstoffmaterial (58) eines von Aluminium und Zink ist;
wobei mindestens einer der ersten und zweiten Füllstoffmaterialien (54, 56) einen füllstoffbezogenen spezifischen elektrischen Widerstand aufweist, der grösser ist als der spezifische elektrische Widerstand von Aluminium;
wobei die Vielzahl der elektrisch leitenden Füllstoffpartikel (36) einen Leitungsweg definiert, über welchen ein, an einen der ersten und zweiten Bleche (12, 14) der Laminatstruktur (100), angelegten elektrischen Strom durch den Klebstoffkern (16) zum anderen der ersten und zweiten Bleche (12, 14) geleitet wird, um eine Widerstandswärme derart zu generieren, dass das erste und zweite Blech (12, 14) mindestens partiell in einer Schweisszone, die den Leitungsweg umfasst, schmilzt

2. Verfahren zum Schweissen einer schweissbaren Laminatstruktur (100), welches Verfahren umfasst:
Bereitstellen einer schweissbaren Laminatstruktur (100), wie mit Anspruch 1 beansprucht;
Bereitstellen einer Metallkomponente (50);
Stapeln der schweissbaren Laminatstruktur (100) und der Metallkomponente (50);
Beströmen mit einem elektrischen Strom durch eine Schweisszone (62), die durch die gestapelte schweissbare Laminatstruktur (100) und die Metallkomponente (50) definiert ist, um eine Widerstandswärme zu erzeugen, die ausreicht, um das erste und zweite Metallblech (12, 14) und die Metallkomponente (50) zumindest teilweise zu schmelzen, um eine Schweissnaht in der Schweisszone (62) zu bilden.

## Revendications

1. Structure laminaire soudable (100) comprenant :
une première feuille métallique (12) ;
une deuxième feuille métallique (14) ;
selon laquelle les première et deuxième feuilles métalliques (12, 14) sont constituées d'un matériau à base d'aluminium **caractérisé par** une résistivité électrique d'aluminium ;
une âme adhésive (16) ;
selon laquelle l'âme adhésive (16) est disposée entre, et fixée aux première et deuxième feuilles métalliques (12, 14) de sorte que l'âme adhésive (16) s'étend en correspondance avec chacune des première et deuxième feuilles métalliques (12, 14) ;
selon laquelle la première feuille métallique (12), la deuxième feuille métallique (14), et l'âme adhésive (16) sont laminées ensemble afin de former la structure laminaire (100) ;
selon laquelle l'âme adhésive (16) comporte une pluralité de particules de remplissage à conductivité électrique (36) dispersées dans un matériau adhésif (38) ;
selon laquelle un pourcentage en poids des particules de remplissage (36) se situe dans la plage d'environ 12% à 49% d'un poids total de l'âme adhésive (16) et le volume des particules de remplissage (36) dans l'âme adhésive (16) est tel que la force de liaison de la structure laminaire est d'au moins 90% de la force de liaison de la structure laminaire formée sans particules de remplissage ;
selon laquelle la pluralité de particules de remplissage (36) est composée d'au moins un premier matériau de remplissage (54) et un deuxième matériau de remplissage (56), différent du premier matériau de remplissage (54), et la pluralité de particules de remplissage (36) est choisie dans un groupe consistant en :
une première pluralité de particules de remplissage selon laquelle :
le premier matériau de remplissage (54) est un composé à phosphure de fer qui est composé de FeP ; et
le deuxième matériau de remplissage (56) est un deuxième composé à phosphure de fer qui est composé de Fe₂P de sorte que le premier composé à phosphure de fer soit différent du deuxième composé à phosphure de fer ;
une deuxième pluralité de particules de remplissage selon laquelle :
le premier matériau de remplissage (54) est du zinc ;
le deuxième matériau de remplissage (56) se présente sous forme de particules d'aluminium ;
selon laquelle les particules de remplissage (36) sont formées en enrobant les particules d'aluminium avec du zinc ;
selon laquelle les particules d'aluminium sont désoxydées avant d'être enrobées de zinc ; et
selon laquelle le pourcentage en poids des particules de remplissage (36) se situe dans une plage d'environ 15 % à 25 % par rapport au poids total de l'âme adhésive (16) ;
une troisième pluralité de particules de remplissage selon laquelle :
le premier matériau de remplissage (54) est un élément choisi parmi le magnésium, le silicium, et le cuivre ; et
le deuxième matériau de remplissage (56) est un oxyde d'un des éléments choisi parmi le magnésium, le silicium, et le cuivre ;
une quatrième pluralité de particules de remplissage selon laquelle :
le premier matériau de remplissage (54) est du magnésium ; et
le deuxième matériau de remplissage (56) est du dioxyde de manganèse ; et,
une cinquième pluralité de particules de remplissage, selon laquelle les particules de remplissage (36) comportent un troisième matériau de remplissage (58) différent des premier et deuxième matériaux de remplissage (54, 56), selon laquelle :
le premier matériau de remplissage (54) est du dioxyde de manganèse ;
le deuxième matériau de remplissage (56) est choisi parmi le magnésium et le silicium ; et
le troisième matériau de remplissage (58) est choisi parmi l'aluminium et le zinc ;
selon laquelle au moins un matériau de remplissage parmi les premier et deuxième matériaux de remplissage (54, 56) présente une résistivité électrique de remplissage supérieure à la résistivité électrique de l'aluminium ;
selon laquelle la pluralité de particules de remplissage à conductivité électrique (36) définit un chemin de conduction par le biais duquel un courant électrique appliquée à l'une des première et deuxième feuilles métalliques (12, 14) de la structure laminaire (100) est conduit à travers l'âme adhésive (16) vers l'autre feuille des première et deuxième feuilles métalliques (12, 14) pour générer une chaleur résistive, de manière à faire fondre au moins partiellement les première et deuxième feuilles métalliques (12, 14) dans une zone de soudage comportant le chemin de conduction.

2. Procédé de soudage d'une structure laminaire soudable (100), le procédé comprenant :
la mise à disposition d'une structure laminaire soudable (100) selon la revendication 1 ;
la mise à disposition d'un composant métallique (50) ;
l'empilage de la structure laminaire soudable (100) et du composant métallique (50) ;
l'application d'un courant électrique à travers une zone de soudage (62) définie par la structure laminaire soudable (100) et le composant métallique (50) empilés, afin de générer une chaleur résistive suffisante pour faire fondre au moins partiellement les première et deuxième feuilles métalliques (12, 14) et le composant métallique (50) pour former une soudure dans la zone de soudage (62).
